# EUROPÄISCHE PATENTSCHRIFT

(11) **EP 1 664 519 B1**
(45) Veröffentlichungstag und Bekanntmachung des Hinweises auf die Patenterteilung: **23.12.2009**
(21) Anmeldenummer: 04786224.8
(22) Anmeldetag: 31.08.2004
(51) Int. Cl.: F02M 25/07, F01N 3/28

(54) **ABGASWÄRMEÜBERTRÄGER, INSBESONDERE ABGASKÜHLER FÜR ABGASRÜCKFÜHRUNG IN KRAFTFAHRZEUGEN**
EXHAUST-GAS HEAT EXCHANGER, IN PARTICULAR EXHAUST-GAS COOLER FOR EXHAUST GAS RECIRCULATION IN MOTOR VEHICLES
ECHANGEUR DE CHALEUR DE GAZ D'ECHAPPEMENT, NOTAMMENT REFROIDISSEUR DE GAZ D'ECHAPPEMENT POUR LE RECYCLAGE DE GAZ D'ECHAPPEMENT DANS DES VEHICULES AUTOMOBILES

(30) Priorität: 18.09.2003 DE 10343698
(43) Veröffentlichungstag der Anmeldung: 07.06.2006
(73) Patentinhaber: Behr GmbH & Co. KG, 70469 Stuttgart (DE)
(72) Erfinder: LUTZ, Rainer, 71711 Steinheim (DE)
(74) Vertreter: Mantel, Berthold Friedrich
(86) Internationale Anmeldenummer: PCT/EP2004/009687
(87) Internationale Veröffentlichungsnummer: WO 2005/028848

(56) Entgegenhaltungen:
- EP-A- 0 677 715
- DE-A- 10 054 221
- US-A- 4 359 863
- PATENT ABSTRACTS OF JAPAN Bd. 2000, Nr. 08, 6. Oktober 2000 (2000-10-06) -& JP 2000 146465 A (USUI INTERNATL IND CO LTD), 26. Mai 2000 (2000-05-26)
- PATENT ABSTRACTS OF JAPAN Bd. 2000, Nr. 12, 3. Januar 2001 (2001-01-03) -& JP 2000 249003 A (ISUZU MOTORS LTD), 12. September 2000 (2000-09-12)
- PATENT ABSTRACTS OF JAPAN Bd. 018, Nr. 314 (M-1621), 15. Juni 1994 (1994-06-15) -& JP 06 066208 A (YANMAR DIESEL ENGINE CO LTD), 8. März 1994 (1994-03-08)
- PATENT ABSTRACTS OF JAPAN Bd. 2000, Nr. 05, 14. September 2000 (2000-09-14) -& JP 2000 038962 A (ISUZU MOTORS LTD), 8. Februar 2000 (2000-02-08)
- PATENT ABSTRACTS OF JAPAN Bd. 2000, Nr. 05, 14. September 2000 (2000-09-14) -& JP 2000 045881 A (TOYOTA MOTOR CORP), 15. Februar 2000 (2000-02-15)
- PATENT ABSTRACTS OF JAPAN Bd. 1999, Nr. 01, 29. Januar 1999 (1999-01-29) -& JP 10 266902 A (MITSUBISHI MOTORS CORP), 6. Oktober 1998 (1998-10-06) -& DATABASE WPI Section PQ, Week 199850 Derwent Publications Ltd., London, GB; Class Q51, AN 1998-590999 XP002313704 & JP 10 266902 A (MITSUBISHI MOTOR CORP) 6. Oktober 1998 (1998-10-06)

## Beschreibung

Die Erfindung betrifft einen Abgaswärmeübertrager, insbesondere einen Abgaskühler für eine Abgasrückführung in Kraftfahrzeugen nach dem Oberbegriff des Patentanspruches 1.

Abgaswärmeübertrager werden einerseits für Heizzwecke zur Erwärmung des Kühlmittels und andererseits zur Kühlung der Abgase, d. h. als Abgaskühler bei der Abgasrückführung in Kraftfahrzeugen eingesetzt. Die Abgasrückführung, kurz AGR genannt, dient - wie bekannt - der Minderung des Verbrauches und der Herabsetzung der Emissionen. Abgasrückführsysteme wurden beispielsweise durch die DE-C 199 06 401 bekannt. Ein Problem bei derartigen Abgaswärmeübertragem, insbesondere Abgaskühlem ist die Rußablagerung bei Dieselabgasen in den Abgaskanälen des Abgaskühlers. Von der Anmelderin wurde daher in der EP-A 677 715 und in der DE-A 195 40 683 für Abgaskühler vorgeschlagen, in den Abgasrohren Verwirbelungseinrichtungen anzuordnen, die eine Rußablagerung in der Abgasströmung verhindern. Dazu sind auf der Innenseite der Abgaskanäle V-förmig angeordnete Laschen bzw. Erhebungen, so genannte Winglets angeordnet, welche spezifische Wirbel in der Abgasströmung erzeugen. Alternativ hierzu können auch Rippen verwendet werden. Diese Maßnahmen sind allerdings nicht immer ausreichend zur Verhinderung von Rußablagerungen, die zu einer Leistungsminderung des betreffenden Abgaswärmeübertragers führen - mit der Folge, dass man die Abgaskühler größer dimensionieren muss.

Zudem sind aus der JP 2000-146 465 und JP 2000-249 003 Abgaswärmeübertrager bekannt, bei denen mit Hilfe eines Katalysators Rußpartikel im rückgeführten Abgas abgebrannt werden.

Es ist Aufgabe der vorliegenden Erfindung, einen Abgaswärmeübertrager, insbesondere Abgaskühler der eingangs genannten Art dahingehend zu verbessern, dass Rußablagerungen in den Abgaskanälen vermieden oder weiter reduziert werden.

Diese Aufgabe wird durch die Merkmale des Patentanspruches 1 gelöst. Erfindungsgemäß ist vorgesehen, dass dem Abgaswärmeübertrager ein Oxidationskatalysator, insbesondere ein Dieseloxidationskatalysator zu- oder vorgeschaltet ist. Gemäß Anspruch 1 weist der Abgaswärmeübertrager ein Rohrbündel mit Abgasrohren auf. Der Abgaswärmeübertrager kann auch einen Bypasskanal mit Abgasklappe aufweisen. Die Anmelderin hat festgestellt, dass Rußablagerungen im Abgaskühler mit dem Kohlenwasserstoffgehalt in den Abgasen korrelieren. Insbesondere konnte die Anmelderin feststellen, dass die in den Abgasen enthaltenen Kohlenwasserstoffe an den durch Kühlmittel gekühlten Innenwänden der Abgaskanäle bzw. Abgasrohre auskondensieren und die Russpartikel mit den Innenwandungen verkleben. Durch die Zu- oder Vorschaltung eines Dieseloxidationskatalysators in oder vor den Abgaskühler werden die Kohlenwasserstoffe aufgrund des im Dieselabgas reichlich vorhandenen Sauerstoffes zu Kohlendioxid und Wasser oxidiert. Der unangenehme "Klebstoff", hervorgerufen durch das Kohlenwasserstoffkondensat, wird somit auf elegante Art und Weise beseitigt. Damit wird der Vorteil erreicht, dass sich weniger Ruß an den Innenwänden der Abgaskanäle ablagert und dort haften bleibt. Die Wärmeleitung und der Wärmedurchgang der Abgaskanäle bzw. Abgasrohre werden somit verbessert.

Dieseloxidationskatalysatoren, bekannt unter der Abkürzung DOC, sind bei Kraftfahrzeugen im Abgasstrang bekannt. Derartige Katalysatoren weisen einen metallischen oder keramischen Wabenkörper mit einer Vielzahl von feinen Abgaskanälen auf, die mit einer katalytischen Substanz, z. B. einem Edelmetall wie Platin beschichtet sind. In Anwesenheit des Katalysators oxidieren die Kohlenwasserstoffe bei Sauerstoffüberschuss im Abgas zu Kohlendioxid und Wasser. Der Aufbau derartiger Katalysatoren, z. B. mit einer Matrix aus Edelstahl ist in den Druckschriften der Anmelderin, der DE-A 29 24 592 und der DE-A 35 43 011 beschrieben. Der Metallträger besteht beispielsweise aus einem glatten und einem gewellten, spiralförmig aufgewikkelten Band, welches nach dem Wickeln verlötet oder verschweißt wird. Anschließend wird dieser Wabenkörper nach bekannten Verfahren mit einer katalytischen Substanz beschichtet. Die Anmelderin hat sich diese Technik zu Eigen gemacht, hat den Dieseloxidationskatalysator aus dem Abgasstrang in die Abgasrückführung "verpflanzt" und mit einem Abgaskühler kombiniert - damit wurde ein überraschender positiver Effekt erzielt.

In nicht erfindungsgemäßer Ausgestaltung ist der Oxidationskatalysator in einer Abgasrückführleitung (AGR-Leitung) angeordnet, die ihrerseits mit dem Abgaswärmeübertrager, vorteilhafterweise über einen Flansch verbunden ist - andere Verbindungen wie eine V-Schelle, ein Schiebesitz oder andere bekannte Rohrverbindungen nach dem Stand der Technik sind möglich. Der Oxidationskatalysator ist somit als separates Bauteil ausgebildet, welches an geeigneter Stelle stromaufwärts vom Abgaswärmeübertrager in die AGR-Leitung eingesetzt, z. B. eingeschweißt wird.

Nach einer weiteren nicht erfindungsgemäßen Ausgestaltung ist der Oxidationskatalysator in den Abgaswärmeübertrager integriert, d. h. Teil des Abgaswärmeübertragers. Damit kann diese integrierte Baueinheit vorgefertigt und in die AGR-Leitung eingesetzt werden, was die Montage erleichtert.

In weiteren nicht erfindungsgemäßer Ausgestaltung ist der Oxidationskatalysator unmittelbar vor dem Eintrittsstutzen, insbesondere in einem Rohrstück angeordnet, welches über einen Flansch mit der AGR-Leitung verbunden ist - auch hier sind andere Verbindungen wie oben genannt möglich. Der Eintrittsstutzen des Abgaswärmeübertragers wird somit lediglich um ein Rohrstück verlängert, welches den Oxidationskatalysator in sich aufnimmt. Dies ergibt eine einfache Bauweise.

Gemäß der Erfindung ist der Oxidationskatalysator innerhalb des Eintrittsstutzens angeordnet, wobei dieser vorteilhafterweise als Diffusor ausgebildet ist. Der Oxidationskatalysator füllt den Querschnitt und den größten Teil des Volumens des Diffusors aus, womit der Vorteil einer äußerst kurzen Baulänge erreicht wird, weil der Oxidationskatalysator in einen bereits vorhandenen Raum des Abgaswärmeübertragers eingesetzt wird. Die Durchströmungskanäle des Oxidationskatalysators könnten sich ebenfalls diffusorartig erweitern, damit die Wirkung eines Diffusors für die Abgase beibehalten wird.

Nach einer weiteren nicht erfindungsgemäßen Ausgestaltung sind die Kanäle des Abgaswärmeübertragers abgasseitig mit einer katalytischen Substanz beschichtet, d. h. der Oxidationskatalysator ist somit in das Rohrbündel des Abgaswärmeübertragers integriert. Dies stellt die kompakteste Bauweise der erfindungsgemäßen Kombination dar, da kein zusätzlicher Katalysatorträger in Form eines metallischen oder keramischen Wabenkörpers erforderlich ist. Damit ergibt sich als weiterer Vorteil ein geringerer abgasseitiger Druckabfall.

Nach einer nicht erfindungsgemäßen Ausgestaltung sind die Abgasleitung oder von der Abgasströmung beaufschlagte Teile der Abgasleitung stromaufwärts vom Abgaswärmeübertrager mit einer katalytischen Substanz belegt - auch damit werden bereits die Vorteile eines Oxidationskatalysators erreicht. Vorteilhaft dabei ist ein Drallerzeuger, welcher Partikel und Tröpfchen in der Abgasströmung an die katalytisch beschichte Wand der Abgasleitung transportiert.

Nach einer weiteren vorteilhaften Ausgestaltung der Erfindung ist der Abgaswärmeübertrager in einer AGR-Leitung angeordnet, die entweder vor oder hinter einer Abgasturbine an die Abgasleitung des Motors angeschlossen ist. Damit ergeben sich unterschiedliche Abgastemperaturen beim Eintritt in den Abgaswärmeübertrager.

Ausführungsbeispiele der Erfindung sind in der Zeichnung dargestellt und werden im Folgenden genauer beschrieben. Es zeigen
- Fig. 1: ein Ausführungsbeispiel mit Katalysator in der AGR- Leitung,
- Fig.2: ein Ausführungsbeispiel mit Katalysator vor dem Eintrittsstutzen,
- Fig. 3: ein Ausführungsbeispiel mit Katalysator im Eintrittsstutzen gemäß der Erfindung,
- Fig. 4: ein Ausführungsbeispiel mit katalytisch beschichteten Abgasrohren und
- Fig. 5: ein Abgasrückführungssystem in schematischer Darstellung.

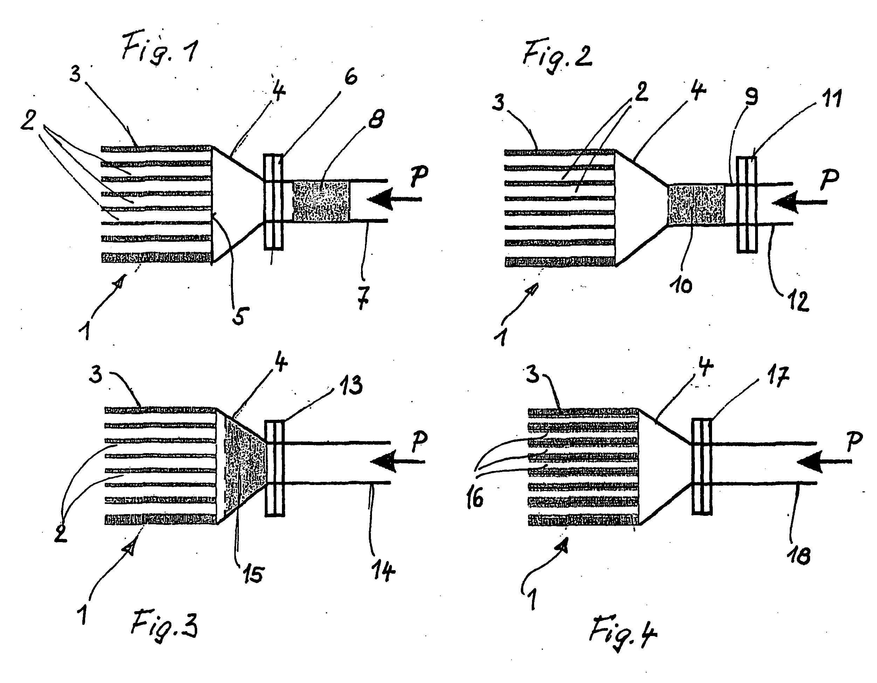

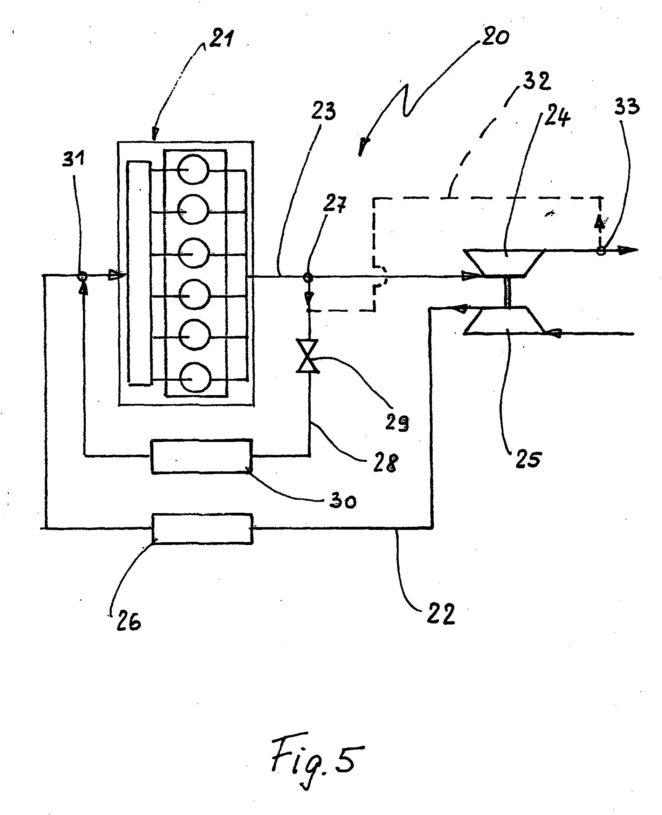

**Fig. 1** zeigt einen etwa nur zur Hälfte dargestellten Abgaskühler 1, welcher ein Bündel von Abgasrohren 2 und ein Gehäuse 3 aufweist. An das Gehäuse 3 schließt sich ein Eintrittsstutzen 4 an, welcher als Diffusor ausgebildet ist. Die Rohre 2 münden in einen nur schematisch dargestellten Rohrboden 5, welcher mit dem Gehäuse 3 verschweißt ist. Die nicht dargestellte Hälfte des Abgaskühlers 1 ist im Wesentlichen symmetrisch zu der in der Zeichnung dargestellten Hälfte. Am Diffusor 4 ist ein Flansch 6 befestigt, welcher den Abgaskühler 1 mit einer Abgasrückführleitung 7, im Folgenden AGR-Leitung genannt, verbindet. Der Abgaskühler 1 wird in Richtung eines Pfeils P von Abgas durchströmt, wobei die AGR-Leitung 7 Teil eines an sich bekannten AGR-Systems einer nicht dargestellten Brennkraftmaschine eines Kraftfahrzeuges ist (s. a. Fig. 5). Die Abgasrohre 2 werden durch ein Kühlmittel gekühlt, welches das Gehäuse 3 durchströmt und einem nicht dargestellten Kühlmittelkreislauf der Brennkraftmaschine entnommen wird. In Strömungsrichtung oberhalb des Flansches 6 ist ein Dieseloxidationskatalysator 8 angeordnet, welcher vom Abgas in Richtung des Pfeils P durchströmt wird. Der Dieseloxidationskatalysator 8, im Folgenden Katalysator genannt, besteht - wie aus dem Stand der Technik bekannt - aus einem mit einer katalytischen Substanz beschichteten Wabenkörper.

Die Funktion des Abgaskühlers 1 in Verbindung mit dem Katalysator 8 in einem AGR-System (s. a. Fig. 5) ist Folgende: Das aus dem Abgaskanal einer nicht dargestellten Brennkraftmaschine abgezweigte Abgas strömt in Richtung des Pfeils P durch die AGR-Leitung 7 in den Katalysator 8. Bei der Brennkraftmaschine handelt es sich um einen Dieselmotor, d. h. die Dieselabgase enthalten u. a. Kohlenwasserstoffe (HC) sowie Sauerstoff. Beim Durchströmen des Katalysators 8 geraten die Abgase in Kontakt mit der katalytischen Substanz, z. B. einem Edelmetall wie Platin, was u. a. die Oxidation der Kohlenwasserstoffe durch den Sauerstoff zur Folge hat. Aus dieser Oxidation entstehen Kohlendioxid (CO2) und Wasser (H2O). Die anschließend in den Diffusor 4 und die Abgasrohre 2 eintretenden Abgase enthalten somit einen erheblich geringeren Anteil an Kohlenwasserstoffen, die die Tendenz haben, an den Innenwandungen der Abgasrohre infolge deren Kühlung durch Kühlmittel zu kondensieren. Die Abgase sind ferner mit Russpartikeln beladen, die die Neigung haben, sich an den Innenwänden der Abgasrohre abzulagern - ein Prozess der durch die Anwesenheit von Kohlenwasserstoffkondensat noch verstärkt wird. Aufgrund des reduzierten Kohlenwasserstoffanteils in den Abgasen wird diese verstärkte Neigung zur Russablagerung unterbunden, da sich kein oder nur noch sehr wenig Kohlenwasserstoffkondensat bildet. Der Abgaskühler 1 arbeitet somit auf der Abgasseite wesentlich sauberer und daher mit einer höheren Leistung und Lebensdauer.

**Fig. 2** zeigt ein weiteres Ausführungsbeispiel, und zwar einen Abgaskühler 1 (es werden im Folgenden für gleiche Teile die gleichen Bezugszahlen verwendet) mit Abgasrohren 2, Gehäuse 3 und Diffusor 4. An die engste Stelle des Diffusors 4 schließt sich ein Rohrstück 9 an, welches einen Dieseloxidationskatalysator 10, im Folgenden Katalysator genannt, aufnimmt. Das Rohrstück 9 des Abgaskühlers 1 ist über einen Flansch 11 mit einer AGR-Leitung 12 verbunden, die in Richtung des Pfeils P vom Abgas durchströmt wird. Der Katalysator 10 wirkt analog wie der Katalysator 8 gemäß Ausführungsbeispiel Fig. 1.

**Fig. 3** zeigt ein erfindungsgemäßes Ausführungsbeispiel in Form eines Abgaskühlers 1 mit Abgasrohren 2 und einem Gehäuse 3 sowie einem Diffusor 4. Der Diffusor 4 ist an seiner engsten Stelle direkt über einen Flansch 13 mit einer AGR-Leitung 14 verbunden, die in Richtung des Pfeils P von rückgeführtem Abgas durchströmt wird. Innerhalb des Diffusor 4, d. h. eines sich in Strömungsrichtung stetig im Querschnitt erweiternden Eintrittsstutzens ist ein Dieseloxidationskatalysator 15 angeordnet, welcher den gesamten Querschnitt des Diffusors 4 ausfüllt. Die im Abgas enthaltenen Kohlenwasserstoffe werden somit beim Durchströmen des Katalysators 15 im Diffusor 4 oxidiert, sodass kohlenwasserstoffarmes Abgas in die Abgasrohre 2 gelangt und einer Russablagerung entgegengewirkt wird.

**Fig. 4** zeigt eine Ausführungsform mit einem Abgaskühler 1, einem Gehäuse 3, einem Diffusor 4 und einem Flansch 17 zur Verbindung mit einer Abgasrückführleitung 18, die in Richtung des Pfeils P von rückgeführtem Abgas durchströmt wird. Die Abgasrohre 16 des Abgaskühlers 1 sind, was nur schematisch dargestellt ist, mit einer katalytischen Substanz beschichtet, die der katalytischen Substanz entspricht, mit welcher die Dieseloxidationskatalysatoren 8, 9, 15 in der Regel beschichtet sind, d. h. beispielsweise mit einem Edelmetall wie Platin. Das Abgas strömt somit direkt in die beschichteten Abgasrohre 16, wo die zuvor beschriebene katalytische Reaktion, d. h. die Oxidation von Kohlenwasserstoff stattfindet. Der Einbau eines Katalysators in den Abgaskühler oder in die AGR-Leitung entfällt hier - verbunden mit dem damit einhergehenden Druckverlust für das Abgas. Ein gesonderter Wabenkörper - wie in den zuvorigen Ausführungsbeispielen - kann also hier entfallen, womit auch die einem Wabenkörper anhaftenden Probleme entfallen.

Nicht in der Zeichnung dargestellt ist eine weitere Variante, nach der die AGR-Leitung sowie von Abgas beaufschlagte Teile der AGR-Leitung mit einer katalytischen Substanz beschichtet sind, wobei auch ein Drallkörper zur Förderung von Partikeln und Tröpfchen an die katalytisch beschichteten Wandungen vorgesehen ist.

**Fig. 5** zeigt in schematischer Darstellung ein Abgasrückführungssystem 20 mit einem Dieselmotor 21, dem eine Ansaugleitung 22 und eine Abgasleitung 23 zugeordnet ist. In der Ansaugleitung 22 ist ein von einer Abgasturbine 24 angetriebener Turbolader 25 angeordnet, welcher die Ansaugluft verdichtet und einem Ladeluftkühler 26 zuführt. Die Abgasturbine 24 ist in der Abgasleitung 23 angeordnet und wird mit den Abgasen des Dieselmotors 21 beaufschlagt. Eine Abgasrückführleitung 28 mit einem Abgasrückführventil 29 und einem Abgaswärmeübertrager 30 ist an einem Verzweigungspunkt 27 an die Abgasleitung 23 und im Anschlusspunkt 31 an die Ansaugleitung 22 angeschlossen. Das Abgas wird somit gekühlt zurückgeführt. Die Entnahme des Abgases im Verzweigungspunkt 27 erfolgt also vor der Abgasturbine 24. Gemäß einer Alternative, welche durch eine gestrichelte Abgasrückführleitung 32 dargestellt ist, wird das Abgas in einem Abzweigungspunkt 33 hinter der Abgasturbine 24 entnommen. Der Abgaswärmeübertrager 30 entspricht dem oben beschriebenen erfindungsgemäßen Abgaswärmeübertrager mit Oxidationskatalysator, welcher hier nicht dargestellt ist. Im Übrigen kann der Abgaswärmeübertrager 30 auch als ein Abgaswärmeübertrager mit Bypasskanal und Abgasbypassklappe, z. B. gemäß der DE 102 03 003 A1 der Anmelderin ausgebildet sein.

## Patentansprüche

1. Abgaswärmeübertrager, insbesondere Abgaskühler (1) für eine Abgasrückführung (AGR) in Kraftfahrzeugen mit von Abgas durchströmten Kanälen und von einem Kühlmittel umströmbaren Rohren (2), die mit ihren Rohrenden in Rohrböden (5) gehalten und von einem das Kühlmittel führenden Gehäuse (3) umgeben sind, an welches abgasseitig ein Eintrittsstutzen (4) anschließt, wobei dem Abgaswärmeübertrager (1) ein Oxidationskatalysator (18, 10, 15, 16) oder Diesel-Oxidationskatalysator zu- oder vorgeschaltet ist und der Oxidationskatalysator oder der Diesel-Oxidationskatalysator (10, 15) in den Abgaswärmeübertrager (1) integriert ist, **dadurch gekennzeichnet, dass** der Katalysator (15) im Eintrittsstutzen (4) angeordnet ist, wobei der Eintrittsstutzen als Diffusor (4) ausgebildet ist und der Katalysator (15) den Diffusorquerschnitt ausfüllt.

2. Abgasrückführungssystem mit einem Verbrennungsmotor (21), insbesondere einem Dieselmotor, mit einer einen Turbolader (25) und einen Ladeluftkühler (26) aufweisenden Ansaugleitung (22), mit einer eine Abgasturbine (24) aufweisenden Abgasleitung (23) und mit einer an die Ansaugleitung (22) und die Abgasleitung (23) anschließbaren AGR-Leitung (28) mit einem Abgaswärmeübertrager (30) nach Anspruch 1, **dadurch gekennzeichnet, dass** die AGR-Leitung (28) in Abgasströmungsrichtung vor der Abgasturbine (24) an die Abgasleitung (23, 27) anschließbar ist.

3. Abgasrückführungssystem nach dem Oberbegriff des Patentanspruches 2, **dadurch gekennzeichnet, dass** die AGR-Leitung (28) in Abgasströmungsrichtung hinter der Abgasturbine (24) an die Abgasleitung (23, 33) anschließbar ist.

## Claims

1. Exhaust gas heat exchanger, in particular an exhaust gas cooler (1) for an exhaust gas recirculation (EGR) in motor vehicles having passages through which exhaust gas flows and tubes (2), around which a coolant can flow, the tube ends of which are held in tube plates (5), and which are surrounded by a housing (3) which guides the coolant and to which an inlet connection piece (4) is connected on the exhaust gas side, wherein an oxidation catalyst (8, 10, 15, 16) or a diesel oxidation catalyst is connected to or upstream of the exhaust gas heat exchanger (1), and the oxidation catalyst or the diesel oxidation catalyst (10, 15) is integrated in the exhaust gas heat exchanger (1), **characterised in that** the catalyst (15) is arranged in the connection piece (4), wherein the connection piece is formed as a diffusor (4), and the catalyst (15) fills the diffusor cross section.

2. Exhaust gas recirculation system having an internal combustion engine (21), in particular a diesel engine, having an induction pipe (22) comprising a turbo charger (25) and a charge-air cooler (26), having an exhaust gas line (23) comprising an exhaust gas turbine (24), and having an EGR line (28), which can be connected to the induction pipe (22) and the exhaust gas line (23) with an exhaust gas heat exchanger (30) according to claim 1, **characterised in that** the EGR line (28) can be connected to the exhaust gas line (23, 27) upstream of the exhaust gas turbine (24) in the direction of flow of the exhaust gas.

3. Exhaust gas recirculation system according to the preamble of claim 2, **characterised in that** the EGR line (28) can be connected to the exhaust gas line (23, 33) downstream of the exhaust gas turbine (24) in the direction of flow of the exhaust gas.

## Revendications

1. Echangeur de chaleur de gaz d'échappement, en particulier refroidisseur de gaz d'échappement (1) pour un recyclage des gaz d'échappement (RGE) dans des véhicules automobiles, comprenant des conduits traversés par des gaz d'échappement et des tubes (2) baignés par un agent de refroidissement, lesquels tubes sont maintenus, par leurs extrémités tubulaires, dans des plateaux à tubes (5), et entourés par un carter (3) guidant l'agent de refroidissement, carter auquel se raccorde, côté gaz d'échappement, une tubulure d'entrée (4), où un catalyseur d'oxydation (18, 10, 15, 16) ou un catalyseur d'oxydation diesel est ajouté ou monté en amont de l'échangeur de chaleur de gaz d'échappement (1), et le catalyseur d'oxydation ou le catalyseur d'oxydation diesel (10, 15) est intégré à l'échangeur de chaleur de gaz d'échappement (1),
**caractérisé en ce que** le catalyseur (15) est disposé dans la tubulure d'entrée (4), où la tubulure d'entrée est configurée comme un diffuseur (4), et le catalyseur (15) remplit la section du diffuseur.

2. Système de recyclage de gaz d'échappement associé à un moteur à combustion interne (21), en particulier un moteur diesel, comprenant une conduite d'admission (22) présentant un turbocompresseur (25) et un refroidisseur d'air de suralimentation (26), comprenant une conduite de gaz d'échappement (23) présentant une turbine à gaz d'échappement (24) et comprenant une conduite (28) de recyclage des gaz d'échappement (RGE) pouvant être raccordée à la conduite d'admission (22) et à la conduite de gaz d'échappement (23), comprenant un échangeur de chaleur de gaz d'échappement (30) selon la revendication 1,
**caractérisé en ce que** la conduite (28) de recyclage des gaz d'échappement (RGE) peut être raccordée à la conduite de gaz d'échappement (23, 27), en amont de la turbine à gaz d'échappement (24) suivant la direction d'écoulement des gaz d'échappement.

3. Système de recyclage de gaz d'échappement selon le préambule de la revendication 2, **caractérisé en ce que** la conduite (28) de recyclage des gaz d'échappement (RGE) peut être raccordée à la conduite de gaz d'échappement (23, 33), en aval de la turbine à gaz d'échappement (24) suivant la direction d'écoulement des gaz d'échappement.
